# EUROPEAN PATENT APPLICATION

(11) **EP 0 657 760 A1**
(43) Date of publication of application: **14.06.1995**
(21) Application number: 94114248.1
(22) Date of filing: 09.09.1994
(51) Int. Cl.: G02B 26/06, G02B 26/08, G02B 27/52

(54) **Image simulation and projection system**

(30) Priority: 15.09.1993 US 121709
(71) Applicant: TEXAS INSTRUMENTS INCORPORATED, Dallas Texas 75265 (US)
(72) Inventor: Lin, Tsen-Hwang, Dallas, Texas 75252 (US); Florence, James, Richardson, Texas 75080 (US); Leddy, Michael, Dallas, Texas 75248 (US); Boysel, Mark, Plano, Texas 75075 (US)
(74) Representative: Schwepfinger, Karl-Heinz, Dipl.-Ing.

(57) **Abstract**

A phase-contrast DMD based image system **236** for projecting an amplitude and phase modulated image. A flexure beam DMD array **234** is used to allow analog phase modulation of reflected light **238**. The phase modulation is converted to amplitude modulation by the phase-contrast imaging optics including a phase plate **124**. The resulting amplitude modulated wave is flicker-free and does not need to be synchronized to optical image sensors.

The arrangement may be incorporated into an image simulation system. The resulting system may be used for testing systems and training.

## Description

This invention relates to the field of scene generation systems and more particularly to non-visible image simulation systems. This invention also relates to field of image projection systems and more particularly to phase contrast image projection systems.

Image sensors detect electromagnetic radiation from a scene and output electrical or optical information extracted from the scene. Examples of systems with image sensors include night and inclement weather vision systems and forward looking infrared (FLIR) navigation systems. Image sensors are becoming more prevalent as the cost to produce such systems decreases and the capabilities of such systems increase. As the quantity and complexity of such systems has increased, the need for generating and projecting synthetic images for input into the image sensors has also grown. There are several difficult technical issues associated with image sensors including initial design optimization, design verification, production testing, and user training. These issues are generally more difficult when dealing with non-visible systems than with visual systems. Present non-visible image simulation systems typically provide insufficient resolution, marginal contrast ratios, low frame or update rates, image smearing and excessive persistence due to the emission from the projection device. Present systems are typically designed for use only with a single image sensor and typically do not create phase information within images.

State of the art infrared systems production testing methods typically inject an electrical test signal for the sensor system to process. Signal injection is not an optimum test method because the image detector with its related electronics and associated gimbals and optics are not tested. The optics and detector of the system are usually tested separately using a very simple static scene or test pattern or a very slowly moving, but somewhat more complex series of synthetic scenes. This two-part test methodology does not perform an end-to-end test of the entire system. Providing a realistic image for input to the image sensor has often required field testing the image sensor which can be very expensive for complex systems. A need exists in the art for an image projection system that can generate and project high-quality images both in real-time and non-real-time, for input into an image sensor.

Spatial light modulators (SLM) are used to modulate radiant energy, such as visible and non-visible light, in optical systems. Spatial light modulators are divided into one or two dimensional arrays of modulation elements called pixels, or picture elements, that represent the smallest addressable unit within the device. The SLM pixel is used to modulate the light distribution within the optical system.

In practice, the light modulation characteristics of most prior art SLMs are coupled combinations of amplitude and phase changes. The modulation characteristic of a pixel is usually controlled by a single applied signal, either an electrical voltage, current or incident optical intensity level, so the amplitude and phase characteristics of the pixel cannot be independently set.

Depending on the design of the SLM, either the amplitude or phase modulation characteristic may dominate the output of the SLM. One type of SLM is the digital micro-mirror device (DMD). DMDs have been used to project images using either Schlieren or dark-field optics. Ott teaches the use of a membrane DMD and a cantilever beam DMD with Schlieren optics to amplitude modulate light in U.S. Patent 4,680,579 issued July 14, 1987. Hornbeck teaches the use of a digital torsion beam DMD and a cantilever beam DMD with dark-field optics to amplitude modulate light in U.S. Patent 5,096,279 issued March 17, 1992. Florence teaches the use of a flexure beam DMD to either phase modulate, or both amplitude and phase modulate light in U.S. Patent 5,148,157 issued September 15, 1992. To independently modulate both the amplitude and phase of incident light requires two SLM elements which requires either doubling the number of elements in the array or reducing the image resolution. This constraint, especially for high resolution display systems, increases both the manufacturing cost of the SLM and the complexity of the associated drive electronics.

The human eye, as well as most image sensors, does not detect phase changes in incident light. Therefore, in order to project a visible image, systems have been limited to simple techniques creating an image using amplitude modulation techniques with associated dependence on Schlieren optics or digital torsion beam implementations with dark field optics. Schlieren optical systems generally have low brightness and require a large light source. Digital torsion beam approaches turn a pixel either on or off and require some type of pulse-width modulation to achieve varying contrast or gray scale output levels. Pulse-width modulation can create visual artifacts in displayed images and typically requires image sensors to be synchronized to prevent image flicker.

A need exists for a modulation scheme that can produce bright, gray scale visual images while eliminating flicker and reducing or eliminating visual artifacts.

The present invention in a first aspect thereof provides an image simulation system having a scene generator that transmits scene data to an array of deflectable digital micro-mirrors to create a non-visible image for use by a non-visible detecting system. For example only, a non-visible image would include but not be limited to infrared and ultraviolet images. The detecting system under test typically uses an image sensor to detect the image and respond to the scene generated. In a sophisticated embodiment of a non-visible image simulation system, an optional controller monitors the response of the image sensor to provide feedback to the scene generation device to allow the scene generation device to update the scene perspective. Provision may also be made to allow a human operator to control the image sensor to allow training personnel in a simulated environment. This system has the advantage of being flexible, and depending on the modulation scheme selected, does not require synchronization of the image sensor and image projector. The system may generate the image using either phase or amplitude modulation.

The present invention in a second aspect thereof provides an analog DMD image projection system capable of displaying an amplitude modulated image. A flexure beam DMD is used to create a phase modulated wavefront. The wavefront is focused onto a wave phase plate which alters the relative phase of the light allowing the reconstituted light to interfere. The interference results in amplitude modulation or a selected combination of amplitude and phase modulation in the resulting wave. Unlike a true Schlieren technique which relies on total suppression of the DC component or zeroth-order Fourier of the modulated energy, this technique attenuates the intensity of the DC component and shifts the relative phase of the DC component p/2 radians.

Because of the wide bandwidth capability of the DMD mirrors, a DMD imaging system may be used for any wavelength of light, including infrared. The DMD is highly reflective, so there is very little heating of the mirrors. This results in a durable display device and allows a different temperature background which is particularly important for uses such as infrared image projection. The phase-contrast modulation scheme produces a flicker-free gray scale image allowing its use in applications that previously required synchronization between the display system and an image sensor.

FIG. 1a is a pictorial view of one embodiment of a basic infrared image simulation system.

FIG. 1b is an stylized pictorial view of the DMD of Figure 1a showing undeflected mirrors.

FIG. 1c is an stylized pictorial view of the DMD of Figure 1a showing undeflected mirrors.

FIG. 2 is a block diagram of one embodiment of a basic image simulation system.

FIG. 3 is a block diagram of another embodiment of an image simulation system.

FIG. 4 is a block diagram of one embodiment of an image projector.

FIG. 5a is a perspective view of one embodiment of a torsion beam digital micro-mirror device.

FIG. 5b is a section view of the digital micro-mirror device of Figure 5a taken along line B-B of Figure 5a.

FIG. 6 is a schematic view of one embodiment of an image projector using a digital torsion beam micro-mirror device.

FIG. 7 is a timeline showing pulse width modulation of a digital micro-mirror device element.

FIG. 8a is a perspective view of one embodiment of a torsion beam analog micro-mirror device.

FIG. 8b is a section view of the analog micro-mirror device of Figure 8a taken along line B-B of Figure 8a.

FIG. 9 is a schematic view of one embodiment of an image projector using an analog torsion beam micro-mirror device.

FIG. 10 is a perspective view of one embodiment of a flexure beam micro-mirror device.

FIG. 11 is a schematic view of one embodiment of an image projector using a flexure beam micro-mirror device.

FIG. 12 is a schematic view of one embodiment of a phase contrast image projector using a flexure beam micro-mirror device.

FIG. 13 is a schematic view of an interface between a torsion beam image projector and an image sensor.

FIG. 14 is a schematic view of an interface between a flexure beam image projector and an image sensor.

FIG. 15a is a perspective view of one embodiment of a flexure beam micro-mirror device.

FIG. 15b is a section view of the flexure beam micro-mirror device of Figure 15a taken along line B-B of Figure 15a.

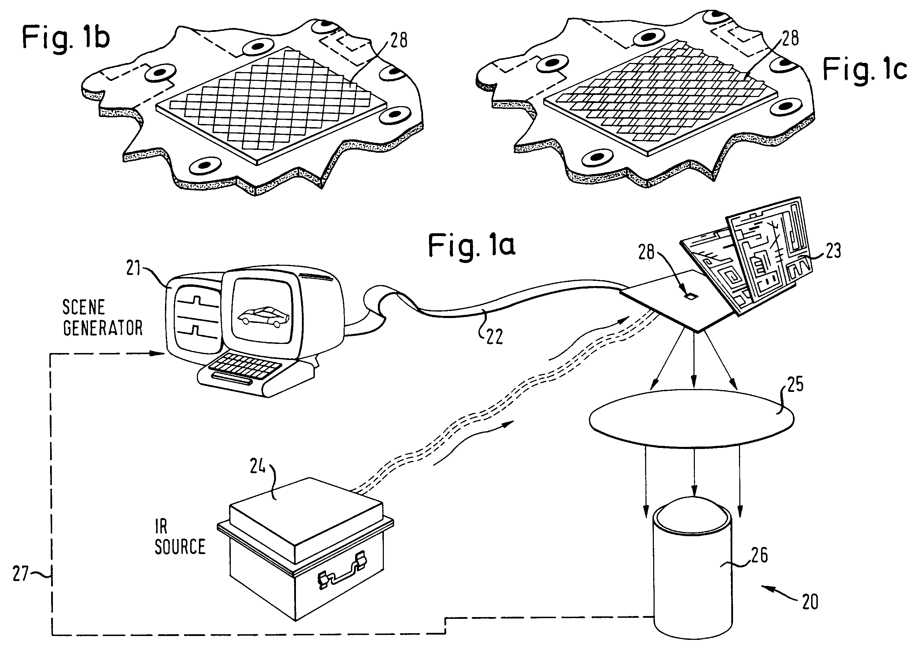

Figure 1a is a pictorial view of one embodiment of an image simulation system depicted generally as **20**. In Figure 1a, scene generator **21** produces an electronic representation of a scene. The electronic signals are sent along graphics pipeline **22** to a digital micro-mirror device (DMD) projector system **23**. DMDs are described in U.S. Patent No. 5,096,279, "Spatial Light Modulator and Method" issued March 17, 1992, and U.S. Patent No. 4,954,789, "Spatial Light Modulator" issued September 4, 1990 and are comprised of an array of micro-mirrors, formed on a single substrate. A radiation source, in this case an infrared source **24**, outputs non-visible electromagnetic radiation which reflects off of the DMD and passes through lens **25** to the sensor system **26**. The infrared source shown is a blackbody source. Blackbody sources are emissive devices designed to emit a uniform distribution of infrared radiation at a predetermined temperature. Also as shown, sensor system **26** may also include an optional output signal to the scene generator **21** as shown by dashed line **27**.

The invention may use other non-visible radiation frequencies, such as ultraviolet, in addition to infrared. As the frequency changes some of the DMD parameters may change. For example, longer wavelengths typically require larger mirrors in order to maintain an equivalent image quality.

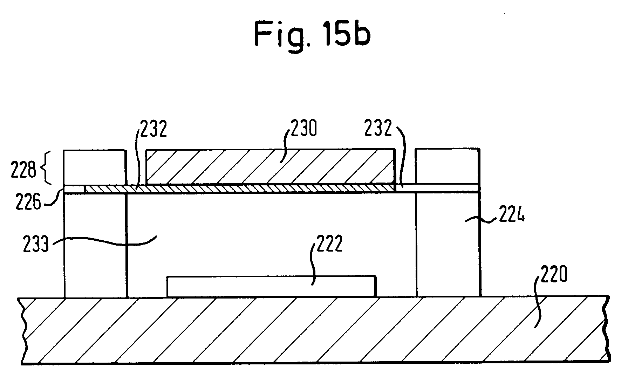

An stylized enlargement of the DMD **28** is shown in Figures 1b and 1c for purposes of explanation only. In Figure 15b, all of the mirrors of the DMD are shown undeflected. It will be appreciated, of course, that in actual practice, to achieve an image with an acceptable resolution, the number of mirror elements in an array would typically be on the order of a quarter of a million or even more, and not less than a hundred as shown in Figure 15b. Deflection of each individual mirror element determines whether or not the incident infrared radiation will be reflected as part of the image projected towards the sensor system **26**. And, of course, to generate an image such as the automobile shown on the display screen of scene generator **21**, only selected ones of the mirror elements of an array would be addressed and deflected. If all of the mirror elements of an array were deflected or turned on, there would simply be a bright spot of infrared light, not a particular image.

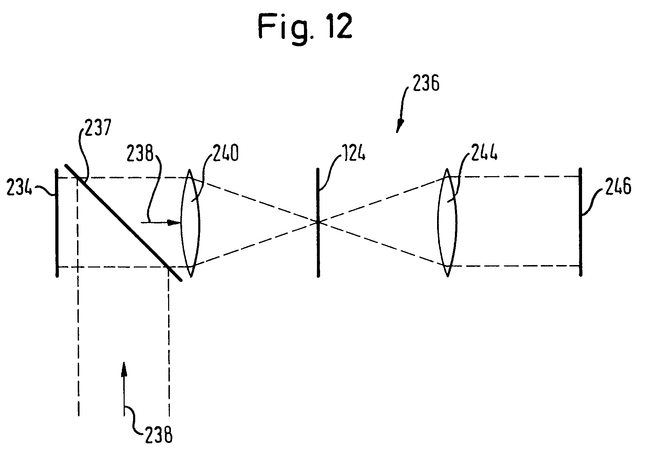

Figure 12 is a block diagram of a basic image simulation system. Scene generator **29** provides the digital information necessary for image projector **30** to create an image. Typically the scene generator will be a workstation or mini-computer in addition to the software necessary to generate the digital scene data, at a rate up to and including real-time. Rather than creating an image, the scene generator could simply read a pre-recorded image that has been stored in a machine-readable format. Displaying a pre-recorded image limits the flexibility of the image simulation system but allows operation with a less powerful scene generator. Depending on the requirements of the image sensor **31** used by the non-visible detection system **32**, the projected image may consist of a simple geometric pattern or rendered perspectives of many objects. The image sensor **31** requirements also determine the required data frame rate and the resolution of the projected image. As a function of the image sensor **31**, optional feedback data **33** from the detector system **32** could be used by the scene generator to update the image perspective. The feedback capability would be useful if the output of the image sensor **31** controlled the using system in some manner. As an example, the detector system may be an automotive FLIR capable of applying the brakes in response to an eminent collision.

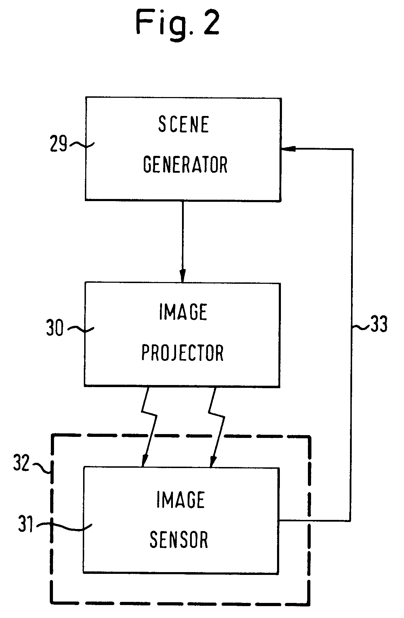

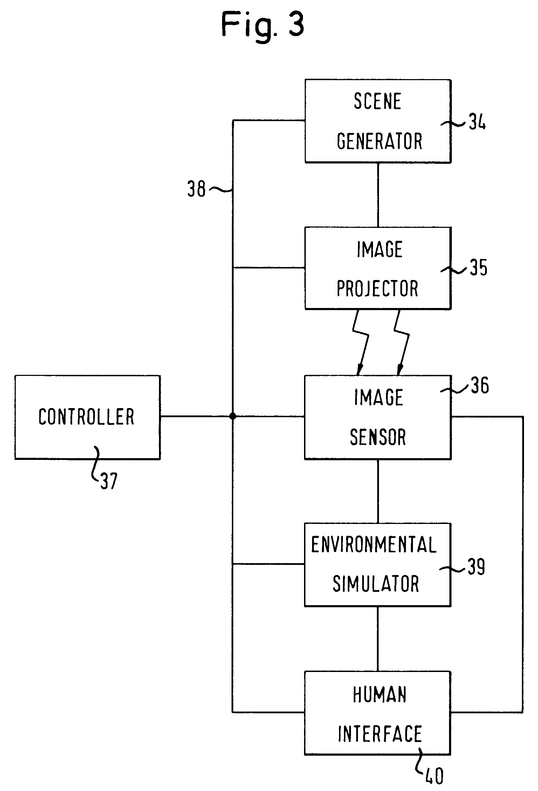

The system shown in Figure 2 would allow end-to-end testing of an image sensor. The block diagram of a more complex test environment is depicted in Figure 3. The system of Figure 3 includes a scene generator **34**, image projector **35**, and image sensor **36** subsystems as in Figure 2, and adds a system controller **37** to coordinate the operation of the subsystems. The system controller sends data to and receives data from the subsystems via system control bus **38**. An environmental simulator **39** may be added to allow motion of the image sensor and to simulate the intended operating environment of the image sensor. The environmental simulator may include a roll table, a temperature chamber, or a vibration table. The environmental simulator may also generate inertial measurement test signals to allow realistic testing of inertial guidance and pointing systems.

The system of Figure 3 could also include a controller interface **40** to allow either automatic or human operator control, or perhaps both automatic and human operator control of the image sensor. The human interface would allow the system to be used to train operators and test system characteristics in a controlled, realistic environment. The combination of a human interface and realistic scene generation capability would allow system operators to train in conditions that simulate actual conditions. For example, the system could simulate driving with an automotive FLIR in heavy fog.

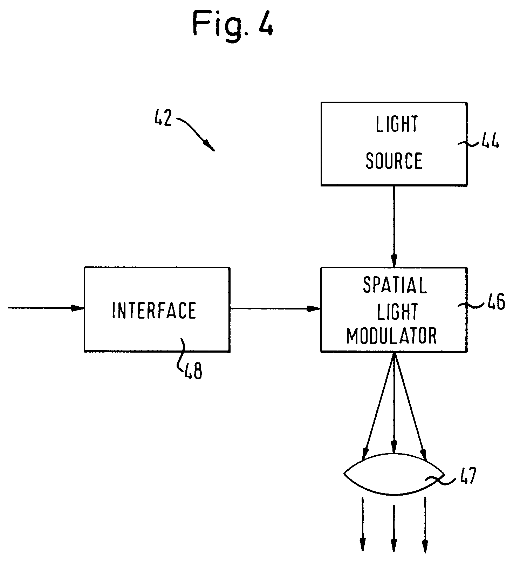

Figure 4 is a block diagram of one embodiment of an image projector **42** similar to image projectors **28** or **33**. Image projector **42** includes a electromagnetic radiation source **44** for supplying radiant energy to a DMD **46**, an optional collimating lens **47**, and an interface **48** for converting the received digital scene information to the signals required to control the DMD. Depending on the application and the modulation scheme chosen, the radiation source **44** may be either coherent or non-coherent and may output radiation over any portion of the non-visible spectrum including the infrared and ultraviolet regions. Typically the radiation will be infrared energy in the 8-12 mm band. In the infrared region, either a CO₂ laser or a blackbody source is typically used as a radiation source.

DMDs are formed on a single substrate and are comprised of an array of micro-mirrors, each micro-mirror is typically 17mm to 100mm square. DMDs operate in response to a voltage potential between an address electrode fabricated on a substrate and a reflective surface or mirror suspended over the address electrode. The mirror is separated from the address electrode by a spacer layer. The spacer material is removed from the area above the address electrode forming a well to facilitate movement of the mirrors. The voltage potential results in an electrostatic attractive force between the address electrode and the mirror.

Digital micro-mirror devices have a rigid mirror that is supported by one or more flexible hinges. A digital micro-mirror device mirror deflects into the well in response to the electrostatic attraction between the address electrode and the mirror. Depending on the design of the digital micro-mirror device, the hinges will either bend or twist to allow the mirror to deflect.

The voltage required to deflect the mirrors depends on the mechanical design of the devices. The mirrors may be operated in either a digital mode or an analog mode. In the digital mode, the address voltage is one of two levels. The first voltage level fully deflects the mirror one direction. The second voltage level either does not deflect the mirror or deflects the mirror a second direction. In the analog mode, an analog voltage is used to deflect the mirror to a selected angular or vertical position. Whether the DMD is operated in a digital or analog mode depends on the design of the DMD and the modulation scheme chosen. Interface **48** receives digital scene data from the scene generator and formats the data for the DMD. The interface **48** also translates the data to the voltage levels required by the DMD and controls the display timing for the DMD.

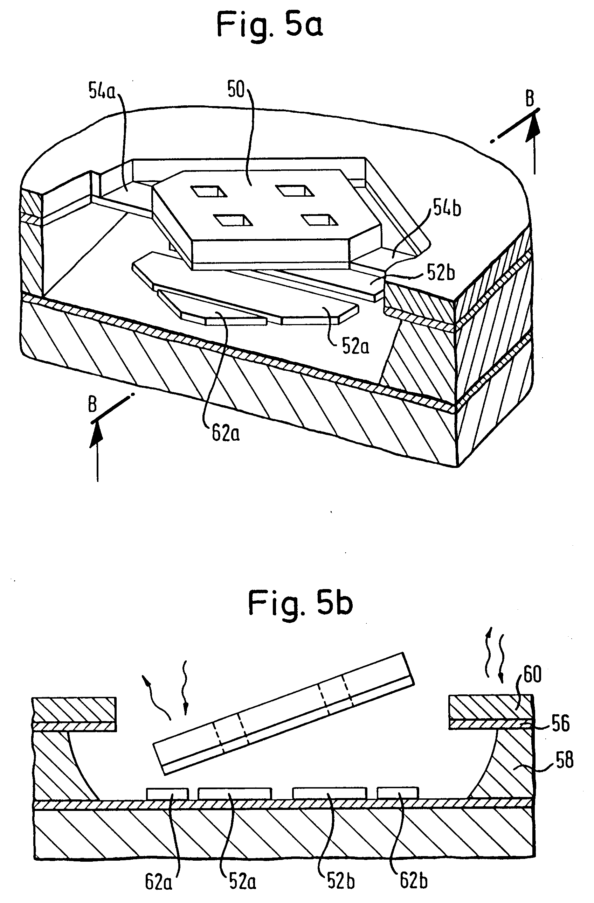

DMDs may be used to modulate the phase, amplitude, or both the phase and amplitude of incident electromagnetic radiation. While in practice the modulation of phase and amplitude is generally coupled, one response dominates the other. For the purposes of this disclosure the incidental response will be ignored. Depending on the design of the DMD and the modulation scheme chosen, DMDs may generate an amplitude only image, a phase only image, or an amplitude and phase image. The image sensor viewing the image will determine what type of image is required and therefore which modulation scheme is required to generate the image. For amplitude only images, a torsion beam DMD may be used with either analog or digital addressing. Figure 5a and 5b are perspective and section views of a typical torsion beam DMD. In Figure 5a and 5b, the mirror **50** is suspended over address electrodes **52a** and **52b** by two torsion hinges **54a** and **54b**. The hinges are formed by depositing a thin metal layer **56** on a planarizing spacer layer **58**. A thick metal layer **60** is deposited to form the mirror. Alter the metal layers have been deposited and patterned, the portion of the spacer layer **58** below the hinges and mirror is removed, typically by plasma etching. Also shown in Figure 5a and 5b are landing electrodes **62a** and **62b**. The landing electrodes are held at the same potential as the mirror and prevent the mirror from touching the address electrodes.

In operation, each mirror typically represents one pixel of the image, although analog full complex modulation, as detailed below, requires two mirrors on one axis of a two dimensional array for each image pixel. Typically an array of mirrors is fabricated on 17 mm centers with a gap of 1.2 mm between the mirrors and approximately 2.0 mm between the mirror and the address electrode. Larger mirrors cause less diffraction but are more difficult to manufacture and typically have lower yields. Larger mirrors will also rotate less if the initial air gap remains constant. Diffraction is also related to the wavelength of the incident radiant energy. For a constant mirror size, diffraction increases with longer wavelengths. A mirror size of 50 to 100 mm square is preferred for infrared energy in the 8-12 mm band although smaller mirrors are adequate for some applications.

DMDs are ideal modulators for several reasons. DMDs have very little mass allowing a very short mirror response time. Because each DMD is highly reflective, it is optically efficient. The metal hinges provide a low thermal resistance path from the mirrors to the substrate. This combination of high reflectance and low thermal resistance prevents the mirrors from heating significantly when using an infrared source. Roughly the same amount of energy is incident to, and absorbed by, the DMD mirrors regardless of whether the pixel is turned on or off. This results in the uniform heating of all of the mirrors in the DMD array, eliminating the image smear and ghosting problems associated with other image projection systems such as resistor arrays.

DMD arrays are constructed with many elements, typically 512 by 512 to 1080 by 1920 depending on the mirror size, which ideally allows the DMD array to oversample the image sensor detector. The oversampling increases the image resolution and the contrast ratio while simultaneously adding redundancy and simplifying the alignment of the array and image sensor. As shown below, for applications that do not require a large field of view (FOV), a 512 by 512 array of 50 mm mirrors can be used in a projector system with a 1 meter focal length collimator to produce an instantaneous field of view (IFOV) of 50 mrad and a total FOV of 1.5°. Both the IFOV and FOV could be increased or decreased by changing the system optics or the array size.

${\text{IFOV}}_{\text{per DMD mirror}} \text{= arctan(} \text{50} \text{µ} \text{m} \text{/} \text{1m} \text{) =} \text{50} \text{µ} \text{rad}$
$\text{Total FOV} \text{=} \text{50} \text{µ} \text{rad} \text{*} \text{512} \text{=} \text{1.5} \text{°}$

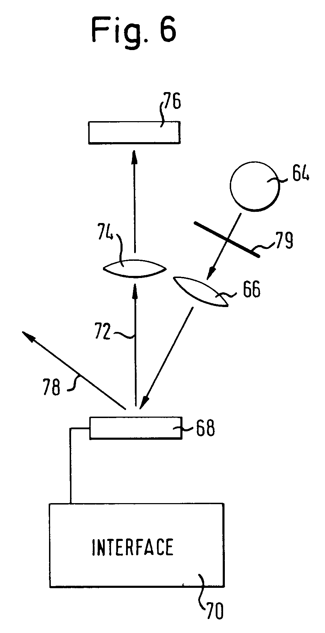

Figure 6 is a simplified schematic diagram of one embodiment of an image projector using a digital torsion beam DMD. Energy from source **64** is focused by lens **66** onto a DMD array **68**. The mirrors on DMD array **68** are tilted either clockwise or counter-clockwise by signals generated by the interface circuit **70**. If the mirrors are rotated clockwise, the energy is reflected along path **72** through lens **74** to the image plane **76** creating an amplitude only image. If the mirrors are rotated counter-clockwise the energy is reflected along path **78** and is not used to form the image. Figure 6 also shows an optional shutter **79** to control incident energy.

Because the digital torsion beam DMD allows only two brightness levels, fully on and fully off, pulse width modulation is typically used to create the appearance of additional brightness levels. Pulse width modulation allows each mirror to be turned on for sub-frame periods which alters the duty cycle of each pixel. If the pixel is turned on and off fast enough, a human eye or integrating detector will average the energy received from the pixel and the pixel will appear to have an intermediate brightness level that is constant.

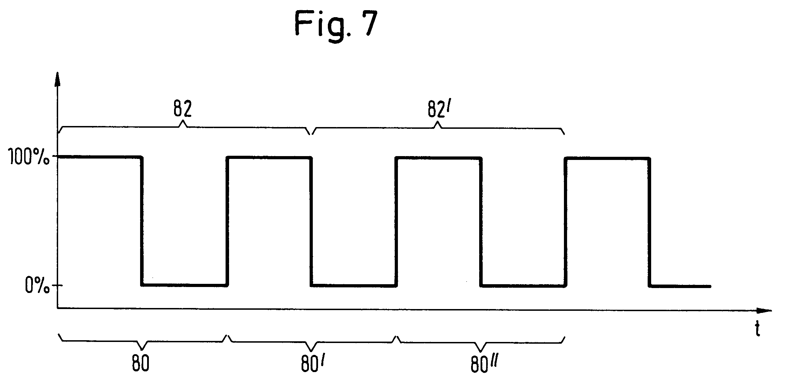

Although pulse width modulation does allow a digital display to generate a gray scale output, pulse width modulation can create flicker problems when the image projector and image sensor are not synchronized. Figure 7 shows a timeline for one digital pixel with a duty cycle of 50%. The vertical axis represents instantaneous pixel brightness which is either 100% or 0% for a digital DMD. For each projector frame period **80**, **80'**, and **80''**, the pixel is on during the first half frame and off during the second half frame. Periods **82** and **82'** show sensor dwell or 'on' times. The image sensor quantizes the photons received during each sensor frame period **82** and **82'**. Because the two frame rates are not synchronized, the sensor will see frames alternating between the 66% and 33% brightness levels. The severity of image flicker depends on the relative frame rates, the brightness level displayed, and the manner in which the frame period is subdivided to implement the modulation scheme.

To eliminate the image flicker problem, the image projector and image sensor could be synchronized. If the image sensor latches an entire frame of data at one time, then interface **48** could synchronize the operation of the image projector and image sensor, typically by letting the image sensor free-run and synchronizing the image projector to it. However, typical image sensors read data serially one pixel at a time or by specific row or column addresses. Even image sensors that are considered staring sensors are electronically addressed in such a fashion as to effectively become scanning sensors. If the image data is not latched one frame at a time but rather is serially read pixel by pixel, then interface **48** will have to have the capability of addressing the DMD array in the same sequence. A related problem is caused by the order in which the image sensor reads the image data from the detector. Not only would the frame periods have to be synchronized, but the order in which the pixels are written to by the image projection would have to be coordinated with the order in which the pixels are read by the sensor. This would require interface **48** to include an addressing matrix to alter the ordering of the pixels dependent on the sensor being used. In a production testing environment this would require the interface to be modified, possibly through software, for each image sensor design.

Typical digital DMD mirror arrays do not allow the mirrors to be individually addressed. In order to optimize the data flow onto the DMD chip, data is shifted into the chip one row at a time. Blocks of mirrors are electrically connected so that one bias line biases the mirrors for a large portion of the array. These features generally hamper efforts to individually control one mirror but are not a problem if the designer selects a typical electronic addressing technique.

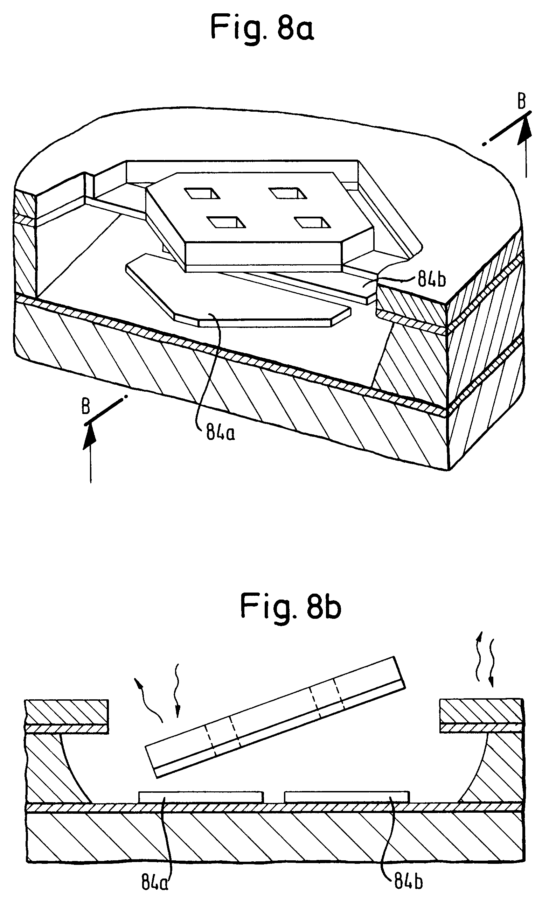

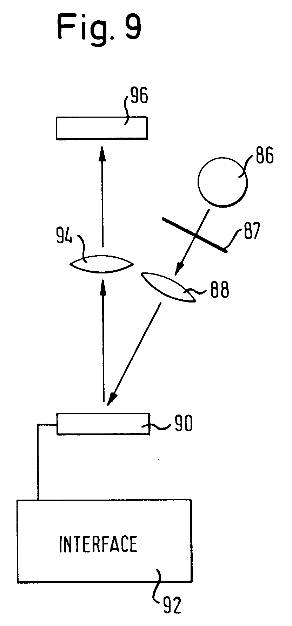

Analog modulation, or beam-steering, may be used to create high contrast amplitude images using a torsion beam or cantilever beam DMD. When analog modulation is used, landing electrodes may be used but are not necessary if the mirror rotation is limited. Figure 8a shows a torsion beam DMD having enlarged address electrodes **84a** and **84b** and no landing electrodes. Only one address electrode is necessary if the beam is only required to rotate one direction. Figure 9 is the block diagram for one possible system layout. In Figure 9, radiant energy from source **86** passes through the optional shutter **87** and is focused by lens **88** onto DMD **90**. Interface **92** generates voltage deflection signals to deflect each mirror of DMD **90**. If a mirror is fully deflected, all of the energy reflected by the mirror will pass through lens **94** and be focused into a bright pixel on the image plane **96**. As the deflection of the mirror is decreased, less of the reflected energy will pass through the lens and that pixel will become dimmer. To prevent mirror collapse, the mirror and address bias potentials are typically chosen to limit travel of the mirror to about 1/3 of the distance between the undeflected gap. The optical layout could be reversed to allow an undeflected pixel to be bright and a fully deflected pixel to be dark. As the mirror deflection changes the brightness of the pixel changes while the pixel remains stationary on the image plane.

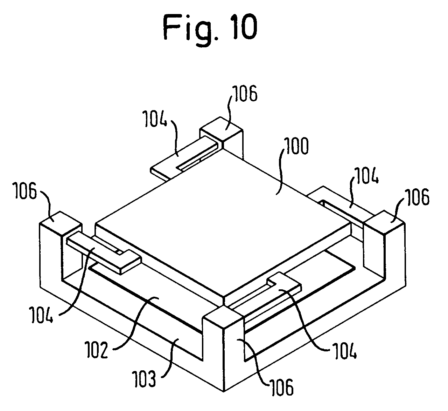

Phase images may be generated using a phase modulation method taught by U.S. Patent Number 5,148,157, "Spatial Light Modulator With Full Complex Light Modulation Capability", issued September 15, 1992. This embodiment of phase modulation uses a flexure beam DMD array, one element of which is shown in Figure 10. Flexure beam DMD **98** is comprised of a mirror **100** suspended over an address electrode **102** by hinges **104** which are attached to support posts **106**. Typically there are four hinges and support posts, but DMDs may be fabricated having a greater or lesser number of hinges and support posts. The electrostatic attraction between the mirror **100** and address electrode **102** causes the mirror **100** to deflect towards the address electrode, lengthening the optical path of the incident and reflected waves. For a constant bias voltage, as the distance between the mirror **100** and address electrode **102** decreases, the electrostatic force increases. If the mirror **100** is deflected too far, the electrostatic force will overcome the restoring force generated by the hinges **104** and the mirror will collapse to the address electrode, typically destroying the device. To prevent mirror collapse, the mirror and address bias potentials are typically chosen to limit travel of the mirror to about 1/3 of the distance between the undeflected air gap.

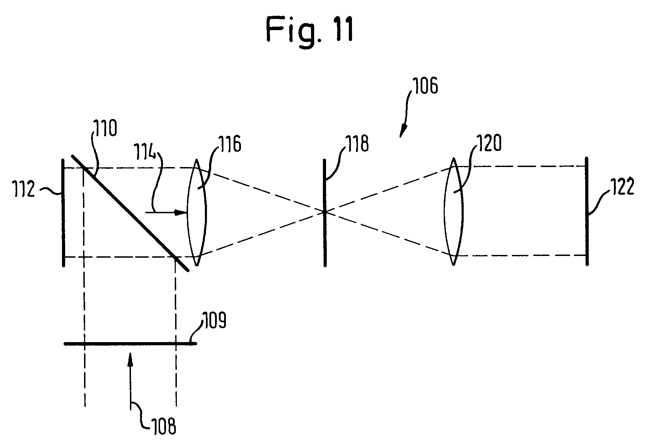

A phase and amplitude modulated image may be generated using the analog full complex method also disclosed in U.S. Patent 5,148,157. For each image pixel produced, analog full complex modulation requires two mirror elements of the DMD array. The output of each pair of mirrors elements is resolved into one pixel element. Because two mirror elements are required, the image resolution produced by a given DMD array will be only half the resolution produced using the other modulation techniques. To maintain the same image resolution the DMD array must contain twice as many individual mirror elements which increases the dimension along one axis of a two dimensional array and also increases the manufacturing complexity. Figure 11 shows one embodiment of an analog full complex image projector **106**. Coherent energy enters the system along path **108**, is passed through optional shutter **109**, and is reflected by beamsplitter **110** onto DMD array **112**. Each mirror element of DMD array **112** is individually deflectable to generate a phase modulated reflected wave. The reflected wave passes through the beamsplitter **110** along path **114**. Lens **116** focuses the reflected wave onto a spatial filter **118** in the transform plane. The filtered energy passes through lens **120** and is collimated onto image plane **122**. The resulting image will have both phase and amplitude modulation.

A phase modulated wave can also be converted to an amplitude and phase modulated wave using a phase contrast modulation process. The optics required for phase contrast modulation are shown in Figure 12. In Figure 12, a phase plate **124** is placed in the transform plane instead of a spatial filter. The phase plate alters the phase of the zeroth-order component relative to the higher-order components. Typically the phase plate has an optical length 1/4 wavelength longer through the zeroth-order portion compared to the higher order portion of the phase plate. The phase plate may be partially mirrored to attenuate, as well as retard, the zeroth-order component of the reflected wave. The purpose of the phase plate is to cause interference in the reflected wave thereby causing amplitude modulation in the reflected wave.

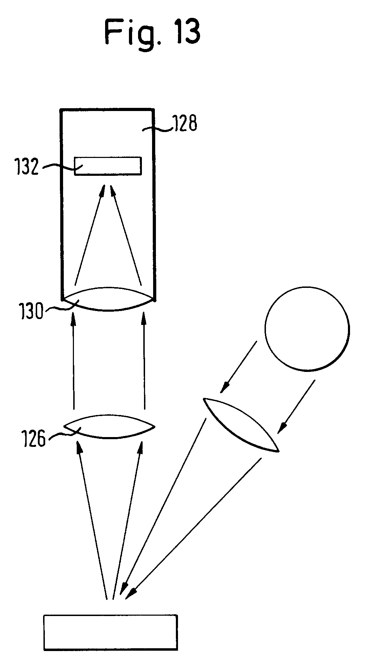

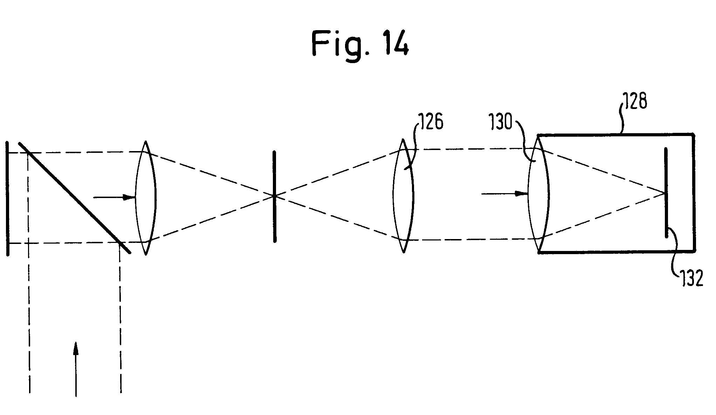

Two interfaces between an image projector and an image sensor are shown in Figures 13 and 14. Figure 13 shows an optical system using a torsion beam DMD and Figure 14 shows an optical system using a flexure beam DMD. In both cases the collimated energy from the image projector output lens **126** enters the image sensor **128** through lens **130**. The energy is focused by lens **130** onto detector **132**. Figures 13 and 14, as well as Figures 6, 9, 11, and 12 are simplified to illustrate the concepts being taught. Transmission path lengths may be changed, and additional optics may be added, to any of the systems to enlarge or reduce the images, obtain the required resolution, or change the FOV or IFOV.

The phase contrast modulation process and apparatus therefore will now be considered in more detail.

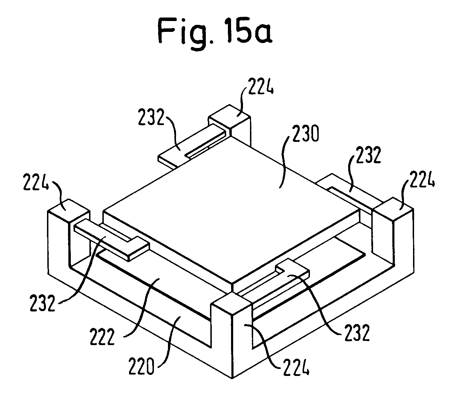

One element of a flexure beam DMD array is shown in Figures 15a and 15b. Figures 15a and 15b, are not drawn to scale but rather certain features have been enlarged for illustration purposes. The DMD is fabricated on a substrate **220** and has addressing circuitry formed on it. The substrate **220** is typically silicon but could be other materials such as gallium-arsenide. The design of the addressing circuitry depends on the scheme used to address the DMD and can include shift registers, amplifiers, latches, and voltage drivers among other possibilities. The addressing circuitry is used to drive an address electrode **222** which is fabricated on the surface of the substrate.

After the addressing circuitry is completed, a planarizing spacer layer is applied to the substrate. Support posts **224** are constructed and a thin metal hinge layer **226** is deposited on top of the spacer layer. Alter patterning the hinge layer, a thick metal mirror layer **228** is deposited onto the hinge layer. The hinge and mirror metal layers are etched to form the mirror **230** and flexure hinges **232** and the spacer layer is removed from below the mirror. The mirror **230** is now suspended over the address electrode **222** by the flexure hinges **232**.

In operation, a voltage is applied to address electrode **222**. If the potential of the address electrode **222** is different from the potential of mirror **230**, an electrostatic attractive force will be generated between the address electrode **222** and the mirror **224**. The electrostatic force will cause the mirror **230** to deflect into the well **232** beneath the mirror. The distance traveled by the deflected mirror **230** depends on the magnitude of the potential difference between the mirror and the address electrode **222** as well as the original air gap between them.

Figure 2 shows the flexure beam DMD **234** in an optical projection system **236**. Coherent light **238** is focused onto the DMD array **234**, typically normal to the mirror surface. Deflecting the mirror elements serves to lengthen the light path and retard the phase of the reflected wave. Therefore, the output of the flexure beam DMD array **234** is a phase modulated wave. The incident and reflected light beams may be separated by beamsplitter **236**. The reflected wave **238** contains both the phase and amplitude information imparted by the DMD.

The phase modulated wave may be converted to an amplitude modulated wave through the phase-contrast process. Assuming that the incident coherent wave is Eₒsinwt and the phase modulation imparted by the DMD array is f(y,z), the constant amplitude composite wave is shown in equation 1 below.

${\text{E}}_{\text{pm}} \text{(} \text{y} \text{,} \text{z} \text{,} \text{t} \text{)=} {\text{E}}_{\text{o}} \text{sin(ω} \text{t} \text{+φ(} \text{y} \text{,} \text{z} \text{))}$

The wave may be reformulated as:

${\text{E}}_{\text{pm}} \text{(} \text{y} \text{,} \text{z} \text{,} \text{t} \text{) =} {\text{E}}_{\text{o}} \text{sin ω} \text{t} \text{cosφ +} {\text{E}}_{\text{o}} \text{cos ω} \text{t} \text{sinφ}$

If f is limited to very small values, typically less than .3 radians, such that sin f » f and cos f » 1, then this becomes:

${\text{E}}_{\text{pm}} \text{(} \text{y} \text{,} \text{z} \text{,} \text{t} \text{) =} {\text{E}}_{\text{o}} \text{sin ω} \text{t} \text{+} {\text{E}}_{\text{o}} \text{φ(} \text{yz} \text{)cos ω} \text{t}$

The first term is independent of the phase delay while the second term is not. By changing the relative phase of the two part equation by p/2 radians, the two terms may be made to interfere producing the amplitude modulated wave:

${\text{E}}_{\text{am}} \text{(} \text{y} \text{,} \text{z} \text{,} \text{t} \text{) =} {\text{E}}_{\text{o}} \text{[1} \text{+ φ(} \text{yz} \text{)} \text{]} \text{cos ω} \text{t}$

In practice, the phase shift is accomplished by focusing the reflected beam with lens **240** and placing a phase plate **124** in the transform plane of the focused reflected beam. The phase plate **124** has a different optical length through the zeroth-order portion compared to the higher-order portion thereby changing the phase relationship of the zeroth-order relative to the higher orders. The phase plate **124** may either retard the relative phase of the zeroth-order component of the reflected wave by p/2 radians, or it may retard the relative phase of all but the zeroth-order component by 3p/2 radians. This phase delay causes the zeroth-order wave, containing the DC information to be in phase with the higher-order components which contain the phase information imparted by the DMD array. The reflected light is then refocused by lens **244** onto image plane **246**. Because the two waves are in phase, interference will occur and the phase modulation will produce an amplitude modulated wave. The contrast ratio of the resulting image may be unproved by attenuating the zeroth-order component to the magnitude of f(y,z).

A practical limitation of this approach is the limited travel of the DMD mirror. Practice has found that if the mirror is displaced more than approximately 33% of the distance between the mirror and the address electrode, the mirror may collapse into the well and the DMD structure may be permanently damaged. Good contrast ratios are possible with a phase modulation of only one radian without attenuating the zeroth order component of the wave. Because of the reflective nature of the DMD, the optical path of the incident light is lengthened by twice the distance of the mirror deflection. For this extreme example, a flexure beam DMD with an air gap of 4mm could allow a phase modulation of approximately 1 radian of 12mm wavelength incident light while limiting mirror travel to only 25% of the air gap. However, one radian is too large for the above approximation, sin f » f and cos f » 1, to be valid. To revalidate the approximation and obtain a sufficient contrast ratio requires attenuating the zeroth-order component to approximately 30% of the original intensity for a phase modulation of .3 radians. The light source is chosen to provide sufficient incident energy.

## Claims

1. A method of amplitude modulation of visible and non-visible light comprising:
providing a coherent incident beam of light having a selected frequency;
deflecting at least one selected element of an array of deflectable micro-mirror elements;
reflecting said incident beam of light from said deflected mirror to form a reflected beam of light, wherein the path of said reflected light is lengthened by said deflecting step, thereby altering the phase of said reflected light;
focusing said reflected beam to separate the zeroth-order components from the other components; and
altering the relative phase of said reflected beam to cause interference between said zeroth-order component and said other components.

2. The method of claim 1, wherein said zeroth order is retarded p/2 radians.

3. The method of claim 1 or claim 2, wherein said selected frequency of said incident beam of light is an infrared frequency.

4. The method of claim 1, claim 2 or claim 3, further comprising the step of separating said reflected beam from said incident beam.

5. The method of any preceding claim, wherein each of said elements of said array of deflectable micro-mirror elements comprises a mirror suspended over an electrode by flexure hinges.

6. The method of any preceding claim, further comprising the step of attenuating said zeroth-order component.

7. An image display system comprising:
a source of coherent light to project incident light along a light path;
a micro-mirror device array having addressable mirror elements located in said light path for reflecting said incident light so as to shift the phase of said reflected light;
a lens for focusing said reflected light, said focusing to separate said reflected light into a zeroth-order component and higher-order components;
a phase plate for altering the relative phase of said focused reflected light thereby causing interference between said zeroth-order component and said higher order components to produce amplitude modulated light.

8. The display system of claim 7, wherein said source is an infrared source.

9. The display system of claim 7, wherein said source is a visible source.

10. The display system of claim 7, wherein said source is an ultra-violet source.

11. The display system of any of claims 7 to 10, wherein said phase plate retards the zeroth-order of said reflected light by p/2 radians.

12. The display system of any of claims 7 to 11, wherein said phase plate attenuates the zeroth-order of said reflected light.

13. The display system of any of claims 7 to 12, further comprising a beamsplitter for separating said incident light from said reflected light.

14. An image simulation system for providing a non-visible image for use by an image detection system comprising:
a scene generator for generating a digital representation of a scene;
an image projector for converting said digital representation of a scene into an optical image, said image projector comprising a non-visible radiant energy source and a digital micro-mirror array connected to said scene generator, said digital micro-mirror array comprising an array of mirror elements, each said mirror element individually deflectable in response to said digital representation generated by said scene generator to vary the brightness of a portion of said optical image, wherein said optical image is generated by phase contrast modulation.

15. A system as claimed in claim 14 and wherein said phase contrast modulation is provided by the method claimed in any of claims 1 to 6 or the apparatus claimed in any of claims 7 to 13.

16. The system of claim 14 or claim 15, further comprising an environmental simulator, said environmental simulator providing environmental stimuli to said image sensor to simulate dynamic operating conditions.

17. A system as claimed in claim 14, claims 15 or claim 16 and including an image sensor sensitive to said non-visible radiant energy and for converting said optical image into an output signal; and
a controller interface for controlling the operation of said image sensor.

18. The system of claim 17, wherein said output signal from said image sensor is an input to said scene generator to effect a change in said digital representation of a scene.

19. The system of claim 17 or claim 18, further comprising a controller to control and coordinate the operation of said scene generator, said image projector, and said image sensor.
